(19) Europäisches Patentamt
European Patent Office
Office européen des brevets

(11) **EP 3 805 014 B1**

(12) **EUROPEAN PATENT SPECIFICATION**

(45) Date of publication and mention
of the grant of the patent:
**20.12.2023  Bulletin 2023/51**

(21) Application number: **19811552.9**

(22) Date of filing: **15.05.2019**

(51) International Patent Classification (IPC):
**B60C 13/00** *(2006.01)*      **B60C 15/00** *(2006.01)*
**B60C 15/06** *(2006.01)*      **B60C 5/00** *(2006.01)*

(52) Cooperative Patent Classification (CPC):
**B60C 5/007; B60C 15/06;** B60C 15/0072;
B60C 2013/007; B60C 2015/009; B60C 2015/061

(86) International application number:
**PCT/JP2019/019329**

(87) International publication number:
**WO 2019/230403 (05.12.2019 Gazette 2019/49)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.05.2018   JP 2018103626**

(43) Date of publication of application:
**14.04.2021   Bulletin 2021/15**

(73) Proprietor: **Bridgestone Corporation
Chuo-Ku
Tokyo 104-8340 (JP)**

(72) Inventors:
• **KATAYAMA, Masahiro
  Tokyo 104-8340 (JP)**

• **UCHIDA, Tatsurou
  Tokyo 104-8340 (JP)**
• **MATSUMOTO, Yoshifumi
  Tokyo 104-8340 (JP)**
• **MATSUI, Kenji
  Tokyo 104-8340 (JP)**

(74) Representative: **Marks & Clerk LLP
15 Fetter Lane
London EC4A 1BW (GB)**

(56) References cited:
WO-A1-2017/183704      WO-A1-2017/183704
JP-A- H07 329 065      JP-A- S51 151 902
JP-A- 2012 040 959      JP-A- 2012 040 959
JP-A- 2014 058 199      JP-A- 2015 089 693
JP-A- 2017 226 241      JP-A- 2017 226 241

## Description

Technical Field

This invention relates to a tire.

Background Art

In recent years, thermoplastic resins and thermoplastic elastomers have been in demand for use as tire materials because of their weight reduction and ease of recycling. For example, International Publication No. 2016/017508 discloses a structure where the wall thickness of a tire frame member comprising a resin material varies on tire radial direction outer sides of bead cores of bead portions. Attention is drawn to the disclosures of WO2017/183704 and JP2017 226 241.

SUMMARY OF INVENTION

Technical Problem

It is believed that ride performance and handling performance can be controlled by varying the wall thickness of the tire frame member on the tire radial direction outer sides of the bead cores as in the conventional example described above.

However, when the wall thickness of the tire frame member at the bead portions is increased to obtain sufficient handling performance, the vertical stiffness of the tire also ends up increasing and the mass of the tire ends up increasing. Furthermore, it is necessary to consider the cost of the resin material configuring the tire frame member.

It is an object of this invention to improve ride performance and handling performance while inhibiting an increase in the amount of resin material used in a tire frame member. Solution to Problem

A tire pertaining to the present invention is as claimed in claim 1

In this tire, the position at which the thickness of the tire frame member starts to decrease from T1 to T2 is on the tire radial direction outer side of the tire radial direction outer ends of the rim flanges, so lateral stiffness, which is rigidity with respect to lateral force, can be increased while inhibiting an increase in the vertical stiffness of the tire. For this reason, ride performance and handling performance can be improved. Furthermore, because of this configuration, an increase in the amount of the resin material used in the tire frame member can be inhibited by optimizing the range of the thick-walled portions in the tire frame member.

Advantageous Effects of Invention

According to the tire pertaining to this invention, ride performance and handling performance can be improved while inhibiting an increase in the amount of resin material used in a tire frame member.

BRIEF DESCRIPTION OF DRAWINGS

    FIG. 1 is a semi-sectional view showing a tire pertaining to a first embodiment.
    FIG. 2 is a semi-sectional view showing a tire pertaining to a second embodiment.
    FIG. 3 is a sectional view showing a tire pertaining to a conventional example.
    FIG. 4 is a chart showing the relationship between vertical stiffness and lateral stiffness in regard to the conventional example and examples.

DESCRIPTION OF EMBODIMENTS

Embodiments of the invention will be described below based on the drawings. In the drawings, the direction of arrow R is a tire radial direction and the direction of arrow W is a tire width direction. "Tire radial direction" refers to a direction that is orthogonal to the axis of rotation of the tire (not shown in the drawings). "Tire width direction" refers to a direction that is parallel to the axis of rotation of the tire. The tire width direction can also be referred to as the tire axial direction.

The dimensions of each part are measured according to the method described in the 2018 edition of YEAR BOOK published by the Japan Automobile Tyre Manufacturers Association (JATMA). When TRA standards or ETRTO standards are applied in the place of use or the place of manufacture, those standards are followed.

The thickness of each part of a tire frame member refers to the average thickness of each part. Namely, a thickness T1 of later-described thick-walled portions 16A refers to the average thickness of the thick-walled portions 16A. Furthermore, a thickness T2 of later-described side portions 18 refers to the average thickness of the side portions 18.

[First Embodiment]

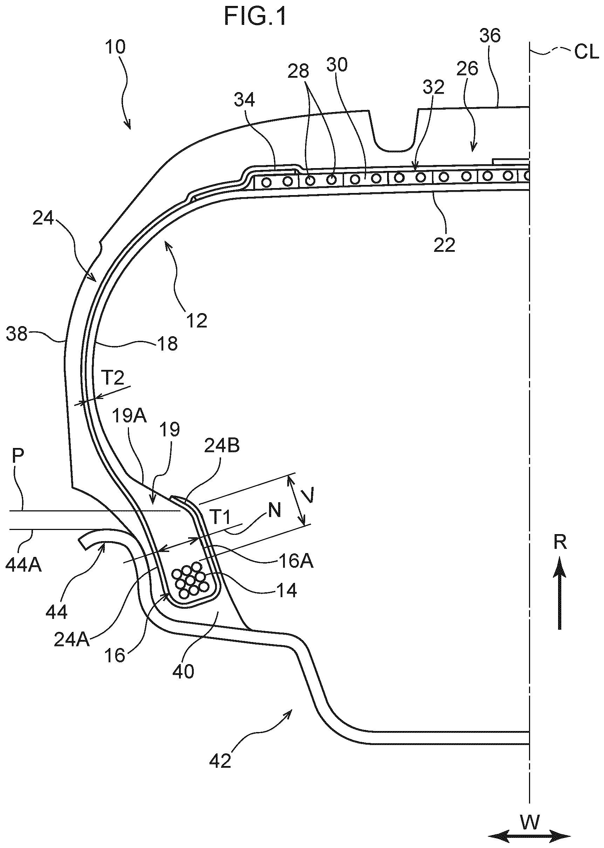

Referring to FIG. 1, a tire 10 pertaining to this embodiment has a tire frame member 12. The tire frame member 12 has bead portions 16 in which bead cores 14 are embedded in a resin material and side portions 18 that comprise the resin material and are continuous with tire radial direction outer sides of the bead portions 16. The side portions 18 on both sides in the tire width direction are interconnected by a crown portion 22.

Examples of the resin material configuring the tire frame member 12 include thermoplastic resins (including thermoplastic elastomers), thermosetting resins, and other commodity plastics, as well as engineering plastics (including super engineering plastics). It will be noted that the resin material here does not include vulcanized rubber.

Thermoplastic resins (including thermoplastic elastomers) are polymer compounds whose material becomes soft and fluid with an increase in temperature and becomes relatively hard and has a certain strength when cooled. In this specification, polymer compounds whose material becomes soft and fluid with an increase in temperature and becomes relatively hard and has a certain strength when cooled and which have a rubber-like elasticity are distinguished as thermoplastic elastomers, and polymer compounds whose material becomes soft and fluid with an increase in temperature and becomes relatively hard and has a certain strength when cooled and which do not have a rubber-like elasticity are distinguished as thermoplastic resins that are not elastomers.

Examples of thermoplastic resins (including thermoplastic elastomers) include thermoplastic polyolefin elastomers (TPO), thermoplastic polystyrene elastomers (TPS), thermoplastic polyamide elastomers (TPA), thermoplastic polyurethane elastomers (TPU), thermoplastic polyester elastomers (TPC), and dynamically crosslinked thermoplastic elastomers (TPV), as well as thermoplastic polyolefin resins, thermoplastic polystyrene resins, thermoplastic polyamide resins, and thermoplastic polyester resins.

Furthermore, as the thermoplastic material, for example, one whose temperature of deflection under load (a load of 0.45 MPa) specified in ISO 75-2 or ASTM D648 is 78 °C or higher, whose tensile strength at yield specified in JIS K7113 is 10 MPa or more, whose tensile strain at break specified in JIS K7113 is 50% or more, and whose Vicat softening temperature (A test) specified in JIS K7206 is 130 °C can be used.

Thermosetting resins are polymer compounds that form a three-dimensional network structure and harden with an increase in temperature. Examples of thermosetting resins include phenolic resins, epoxy resins, melamine resins, and urea resins.

It will be noted that, in addition to the already mentioned thermoplastic resins (including thermoplastic elastomers) and thermosetting resins, commodity plastics such as (meth)acrylic resin, EVA resin, polyvinyl chloride resin, fluorine-based resin, and silicone-based resin may also be used for the resin material.

The tire frame member 12 that is formed using thermoplastic resin can be formed by manufacturing methods such as vacuum forming, pressure forming, injection molding, and melt casting, for example. Compared to a case where the tire frame member is molded and vulcanized using rubber, the manufacturing process can be greatly simplified and the forming time can also be shortened.

It will be noted that the tire frame member 12 may be configured by a single thermoplastic resin, and may be configured by using and joining together thermoplastic resins having different characteristics for each part of the tire frame member 12 (the side portions 18, the crown portion 22, the bead portions 16, etc.) in the same way as in a conventionally common pneumatic tire made of rubber. Furthermore, the tire frame member 12 may also be configured by joining together, at a tire equatorial plane CL, tire half bodies (not shown in the drawings) in each of which one bead portion 16, one side portion 18, and a half-width crown half portion (not shown in the drawings) are integrally formed.

As bead cords used for the bead cores 14, metal fiber or organic fiber monofilaments (single strands) or multifilaments (twisted strands) in which metal fibers or organic fibers are twisted together may be used. As the metal fiber, steel fiber, for example, may be used, and as the organic fiber, aromatic polyamide fiber or aliphatic polyamide fiber, for example, may be used. It will be noted that the metal fiber and organic fiber are not limited to the fiber described above. In this embodiment, steel monofilaments are used as the bead cords.

In a case where the bead cores 14 are configured by a thermoplastic material, it is preferred that the thermoplastic material be an olefin-based, ester-based, amide-based, or urethane-based TPE, or a TPV in which rubber-based resin is partially kneaded. For these thermoplastic materials, it is preferred, for example, that their temperature of deflection under load (a load of 0.45 MPa) specified in ISO 75-2 or ASTM D648 be 75 °C or higher, their tensile strain at yield specified in JIS K7113 be 10% or more, their tensile strain at break specified in JIS K7113 be 50% or more, and their Vicat softening temperature (A test) specified in JIS K7113 be 130 °C or higher.

In this embodiment, each of the bead cores 14 is configured by arranging the bead cords in three rows in the tire width direction and in three tiers in the tire radial direction. Each of the bead cores 14 has a substantially square shape in a tire width direction cross section.

To reinforce the tire frame member 12, a carcass 24 is provided along the tire frame member 12. The carcass 24 has a body portion 24A and turn-up portions 24B. The body portion 24A is provided along the tire outer sides of the bead portions 16, the side portions 18, and the crown portion 22 of the tire frame member 12. End portions on the tire equatorial plane CL side of the body portion 24A overlap in the tire radial direction with a width of 20 mm, for example, in the tire width direction at the part of the tire equatorial plane CL. The turn-up portions 24B are turned up from the tire outer side to the tire inner side about the bead cores 14. Distal ends of the turn-up portions 24B of the carcass 24 are, for example, positioned on the side portion 18 sides (the tire radial direction outer sides) of the thick-walled portions 16A.

A belt layer 26 is provided on the tire radial direction outer side of the carcass 24 at the crown portion 22 of the tire frame member 12. For its cord 28, a material, such as metal, whose rigidity is higher than that of the resin material forming the tire frame member 12 is used. In this embodiment, a steel cord in which steel fibers are twisted together is used as the cord 28. In the belt layer 26, resin material 30 of a resin-coated cord 32 adjacent in the tire width direction is joined to each other.

In the belt layer 26, the resin-coated cord 32 formed by coating the cord 28 with the resin material 30 is configured to be spirally wound in the tire circumferential direction and is adhered or welded to the carcass 24. It will be noted that the belt layer 26 may be formed of only the cord 28 or may be a sheet-like layer in which the cord 28 is coated with the same type of thermoplastic resin as the tire frame member 12.

On the tire radial direction outer side of the tire width direction outer end portions of the belt layer 26, layers 34 for belt end reinforcement are provided. As fiber cord used for the layers 34, for example, aliphatic polyamide, polyester, or aromatic polyamide organic fiber cord can be used. It will be noted that steel cord can also be used as the fiber cord, and known layer materials used in common pneumatic tires can also be used. The fiber cord of the layers 34 is coated with rubber or resin. The layers 34 may also include plural fiber cords, and may also be configured by a sheet-like member of resin material alone or rubber alone not including fiber. It is preferred that the bending rigidity of the layers 34 be equal to or less than the bending rigidity of the belt layer 26 so that the layers 34 follow the deformation of a later-described tread 36.

Furthermore, a tread 36 that is a rubber layer is disposed on the tire radial direction outer side of the crown portion 22 of the tire frame member 12. The tread 36 is disposed along mainly the crown portion 22 of the tire frame member 12, and configures a tire tread that is a contact patch of the tire 10. The tread 36 is layered via the belt layer 26 on the tire frame member 12.

The tread 36 is formed of a rubber with abrasion resistance that is superior to that of the thermoplastic resin forming the tire frame member 12. As the rubber used for the tread 36, the same types of rubber as those used in conventional pneumatic tires made of rubber can be used.

On the tire width direction outer sides of the carcass 24 along the side portions 18, side rubber layers 38 are provided. Furthermore, rubber layers 40 are also provided around the bead portions 16.

Assuming that T1 is the thickness of the thick-walled portions 16A of the tire frame member 12 that are adjacent to the tire radial direction outer sides of the bead cores 14 and that T2 is the thickness of the side portions 18, T1 > T2. The thicknesses T1, T2 are each substantially constant. Here, the direction in which the thickness T1 of the thick-walled portions 16A is measured is the direction of a normal N with respect to the body portion 24A of the carcass 24 along the thick-walled portions 16A.

At intermediate portions 19 between the thick-walled portions 16A and the side portions 18, the thickness of the tire frame member 12 decreases from T1 to T2. Sloping surfaces 19A are formed on the tire width direction inner sides of the intermediate portions 19. The sloping surfaces 19A slope outward in the tire width direction heading outward in the tire radial direction with respect to the longitudinal direction of the thick-walled portions 16A. Because of this, the thickness of the tire frame member 12 gradually decreases from T1 to T2. It will be noted that the sloping surfaces 19A are not limited to having the cross-sectionally linear shape shown in the drawings and may also have a curved shape or a polylinear shape.

A position P at which the thickness of the tire frame member 12 starts to decrease from T1 to T2 is on the tire radial direction outer side of tire radial direction outer ends 44A of rim flanges 44 of a rim 42 on which the bead portions 16 are mounted.

Furthermore, an aspect ratio of the thick-walled portions 16A in a tire width direction cross section is 1.3 to 2.0. "Aspect ratio" here, when V denotes the vertical dimension of the thick-walled portions 16A in a direction orthogonal to the normal N in a tire width direction cross section, is the ratio of the vertical dimension V to the thickness T1, that is, V/T1. When the aspect ratio falls below the numerical range, deformation in the lateral direction becomes greater than in the vertical direction. Furthermore, when the aspect ratio exceeds the numerical range, the rigidity of the tire overall increases and it becomes difficult for the tire to deform.

(Action)

This embodiment is configured as described above, and the action thereof will be described below. Referring to FIG. 1, in the tire 10 pertaining to this embodiment, the position P at which the thickness of the tire frame member 12 starts to decrease from T1 to T2 is on the tire radial direction outer side of the tire radial direction outer ends 44A of the rim flanges 44, so lateral stiffness, which is rigidity with respect to lateral force, can be increased while inhibiting an increase in the vertical stiffness of the tire 10. For this reason, ride performance and handling performance can be improved. Furthermore, because of this configuration, an increase in the amount of the resin material used in the tire frame member 12 can be inhibited by optimizing the range of the thick-walled portions 16A in the tire frame member 12.

Furthermore, the thickness of the tire frame member 12 gradually decreases from T1 to T2 at the intermediate portions 19, so the change in the rigidity of the tire frame member 12 is gentle. For this reason, the durability of the tire can be improved.

Moreover, the aspect ratio (V/T1) of the thick-walled portions 16A in a tire width direction cross section is appropriately set, so deformation in the lateral direction can be inhibited while maintaining deflection in the longitudinal direction.

In this way, according to this embodiment, ride performance and handling performance can be improved while inhibiting an increase in the amount of the resin material used in the tire frame member 12.

[Second Embodiment]

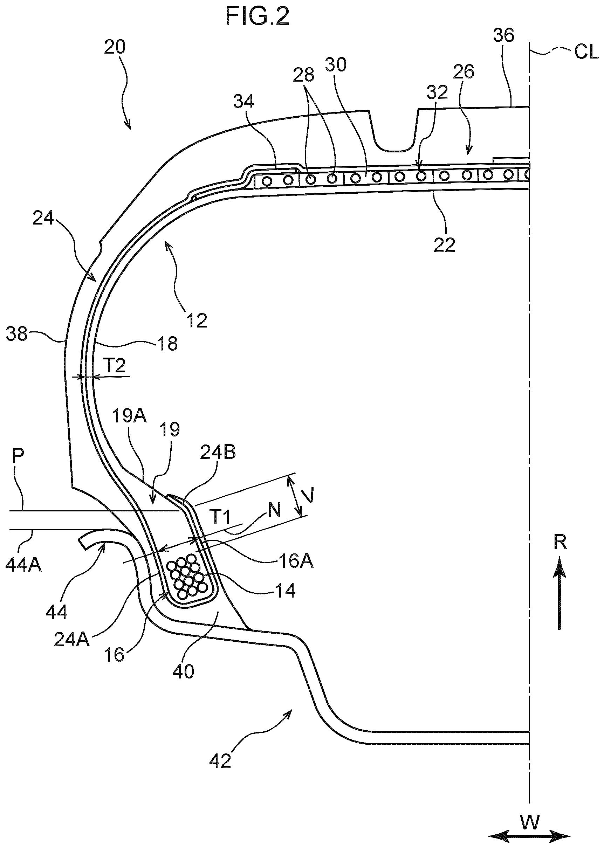

Referring to FIG. 2, in a tire 20 pertaining to this embodiment, each of the bead cores 14 is configured by arranging the bead cords in three rows in the tire width direction and in four tiers in the tire radial direction. Each of the bead cores 14 has a rectangular shape in a tire width direction cross section. In this embodiment, the number of tiers in the tire radial direction in each of the bead cores 14 is one more than it is in the first embodiment.

In this tire 20, the number of tiers in the tire radial direction in each of the bead cores 14 is one more than it is in the first embodiment, so the bending rigidity of the bead portions 16 is greater. Consequently, the lateral stiffness of the tire 20 can be further increased. Furthermore, because of this, ride performance can be further improved.

Other portions are the same as those of the first embodiment, so identical portions are assigned identical reference signs in the drawings, and description thereof will be omitted.

[Other Embodiments]

Examples of embodiments of the invention have been described above, but the embodiments of the invention are not limited to what is described above and can of course be modified and implemented in various ways within the scope of the claim.

The thickness of the tire frame member 12 gradually decreases from T1 to T2, but the thickness is not limited to this and may also decrease in a stepwise manner.

The aspect ratio of the thick-walled portions 16A in a tire width direction cross section is 1.3 to 2.0.

(Test Example)

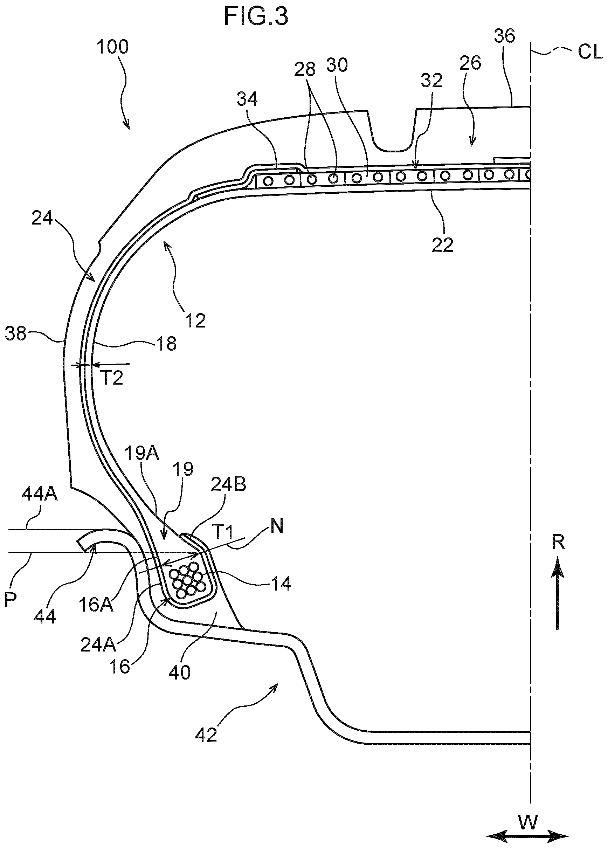

The relationship between vertical stiffness and lateral stiffness when the tire 10 pertaining to the first embodiment in FIG. 1 was used as example 1, the tire 20 pertaining to the second embodiment in FIG. 2 was used as example 2, and a tire 100 shown in FIG. 3 was used as a comparative example was found. The comparative example in FIG. 3 differs from example 1 and example 2 in that the position P at which the thickness of the tire frame member 12 starts to decrease from T1 to T2 is on the tire radial direction inner side of the tire radial direction outer ends 44A of the rim flanges 44. Other portions of the comparative example are the same as those of example 1 (the first embodiment).

Measurement values for vertical stiffness and lateral stiffness under conditions of Bridgestone measuring instruments, an air pressure of 220 kPa, and a load of 4.25 kN were found. Vertical stiffness is the slope of a load when a load is applied and vertical deflection, and lateral stiffness is the slope of the relative amount of displacement when displaced in the lateral direction under a load (4.25 kN) and the force that is produced.

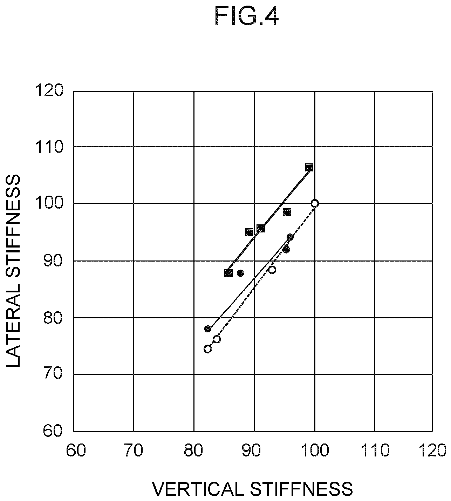

The results are as shown in FIG. 4. Referring to FIG. 4, vertical stiffness is expressed by an index in a case where 100 represents a shape with an aspect ratio of 0 (V=0) and a standard resin material elastic modulus of 300 MPa, so that the greater the numerical value is, the larger vertical stiffness is. Furthermore, lateral stiffness is expressed by an index in a case where 100 represents a shape where V=0, so that the greater the numerical value is, the greater lateral stiffness is. Furthermore, in FIG. 4, white circles represent the comparative example, black circles represent example 1, and black squares represent example 2.

According to FIG. 4, lateral stiffness is higher in examples 1 and 2 than it is in the comparative example. This shows that lateral stiffness is increased by increasing the volume of the thick-walled portions 16a of the bead portions 16 in the tire frame member 12. Furthermore, the increase in lateral stiffness in example 2 is conspicuous. This shows that lateral stiffness is greatly increased by increasing the aspect ratio of the thick-walled portions 16A in example 2 and providing the configuration of the bead cores 14 (the arrangement of the bead cords) with one tier more in the tire radial direction than in example 1 and the comparative example. Consequently, it will be understood that among the comparative example and examples 1 and 2, handling performance is enhanced by inhibiting the amount of deformation in the lateral direction in example 2.

The disclosure of Japanese Patent Application No. 2018-103626, filed on May 30, 2018, is referred to herein.

**Claims**

1. A tire (10) comprising a tire frame member (12) that has bead portions (16) in which bead cores (14) are embedded in a resin material and side portions (18) that comprise the resin material and are continuous with tire radial direction outer sides of the bead portions (16),
   wherein:

   assuming that T1 is a thickness of thick-walled portions (16A) of the tire frame member (12), which are adjacent to tire radial direction outer sides of the bead cores (14), and that T2 is a thickness of the side portions (18), T1 > T2, a thickness of the tire frame member (12) decreases from T1 to T2 between the thick-walled portions and the side portions, a position at which the thickness of the tire frame member (12) starts to decrease from T1 to T2 is on a tire radial direction outer side of tire radial direction outer ends of rim flanges of a rim when the bead portions are mounted thereon,

the thickness of the tire frame member (12) gradually decreases from T1 to T2, **characterized in that**

an aspect ratio of the thick-walled portions (16A) in a tire width direction cross section is 1.3 to 2.0.

## Patentansprüche

1. Reifen (10), der ein Reifenrahmenelement (12) umfasst, das Wulstabschnitte (16), in denen Wulstkerne (14) in einem Harzmaterial eingebettet sind, und Seitenabschnitte (18), die das Harzmaterial umfassen und mit in Reifenradialrichtung äußeren Seiten der Wulstabschnitte (16) zusammenhängend sind, aufweist,

wobei:

angenommen, dass T1 eine Dicke von dickwandigen Abschnitten (16A) des Reifenrahmenelements (12) ist, die zu in Reifenradialrichtung äußeren Seiten der Wulstkerne (14) benachbart sind, und dass T2 eine Dicke der Seitenabschnitte (18) ist,

$$T1 > T2,$$

eine Dicke des Reifenrahmenelements (12) von T1 zu T2 zwischen den dickwandigen Abschnitten und den Seitenabschnitten abnimmt,
eine Position, bei der die Dicke des Reifenrahmenelements (12) beginnt, von T1 zu T2 abzunehmen, sich auf einer in Reifenradialrichtung äußeren Seite von in Reifenradialrichtung äußeren Enden von Felgenhörnern einer Felge befindet, wenn die Wulstabschnitte darauf montiert sind,
die Dicke des Reifenrahmenelements (12) von T1 zu T2 allmählich abnimmt, **dadurch gekennzeichnet, dass**
ein Seitenverhältnis der dickwandigen Abschnitte (16A) in einem Querschnitt in Reifenbreitenrichtung 1,3 bis 2,0 beträgt.

## Revendications

1. Pneumatique (10), comprenant un élément de cadre de pneumatique (12) qui comporte des parties de talon (16), dans lequel des tringles (14) sont noyées dans un matériau de résine, et des parties latérales (18), qui comprennent le matériau de résine et s'étendent en continu avec des côtés externes, dans la direction radiale du pneumatique, des parties de talon (16) ;
dans lequel :

en supposant que T1 représente une épaisseur des parties à paroi épaisse (16A) de l'élément de cadre du pneumatique (12) qui sont adjacentes à des côtés externes, dans la direction radiale du pneumatique, des tringles (14) et que T2 représente une épaisseur des parties latérales (18) ;

$$T1 > T2 ;$$

une épaisseur de l'élément de cadre de pneumatique (12) est réduite de T1 à T2 entre les parties à paroi épaisse et les parties latérales ;
une position au niveau de laquelle l'épaisseur de l'élément de cadre du pneumatique (12) commence à se réduire de T1 à T2 se situe sur un côté externe, dans la direction radiale du pneumatique, des extrémités externes, dans la direction radiale du pneumatique, de rebords de jante d'une jante lorsque les parties de talon y sont montées ;
l'épaisseur de l'élément de cadre du pneumatique (12) est progressivement réduite de T1 à T2, **caractérisé en ce que** :
un rapport d'aspect des parties à paroi épaisse (16A), dans une section transversale dans une direction de la largeur du pneumatique, est compris entre 1,3 et 2,0.

# FIG.1

# FIG.2

## FIG.3

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016017508 A
- WO 2017183704 A
- JP 2017226241 B
- JP 2018103626 A

**Non-patent literature cited in the description**

- YEAR BOOK. Japan Automobile Tyre Manufacturers Association (JATMA), 2018